# EUROPEAN PATENT APPLICATION

(11) **EP 4 818 781 A1**
(43) Date of publication of application: **07.10.2026**
(21) Application number: 25225749.8
(22) Date of filing: 19.12.2025
(51) Int. Cl.: G02B 6/44

(54) **AN OPTICAL UNIT FOR OPTICAL FIBER CABLE**

(30) Priority: 31.03.2025 IN 202511032076
(71) Applicant: Sterlite Technologies Limited, Gurugram, Haryana 122102 (IN)
(72) Inventor: Sunkara, Veera, 122102 Gurugram (IN); Sai, Satya, 122102 Gurugram (IN); Bhatt, Darshana, 122102 Gurugram (IN); Behera, Rahul, 122102 Gurugram (IN)
(74) Representative: Valet Patent Services Limited

(57) **Abstract**

The present disclosure relates to an optical unit for optical fiber cable (100) comprising one or more unified fiber elements (UFEs) (200). Further, each UFE (200) comprises one or more optical fibers (112) and one or more tensile yarns (108) embedded in resin layer (106) forming an integral unit.

## Description

### TECHNICAL FIELD

Embodiments of the present disclosure relate to the field of telecommunication fiber, and more particularly, relates to an optical unit for optical fiber cable.

This application claims the benefit of Indian Application No. "202511032076" titled "AN OPTICAL UNIT FOR OPTICAL FIBER CABLE" filed by the applicant on March 31, 2025 which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

In modern optical fiber applications, the demand for efficient, high-performance fiber optic cables continues to grow, particularly for installations that require flexibility, ease of installation, and durability. Conventionally, optical fiber units have been designed with protective layers such as acrylic coatings, aramid yarns, and outer sheaths to ensure the fibers are protected from external environmental factors and mechanical stresses. However, these traditional designs come with inherent limitations that affect their performance, especially in terms of stiffness, cost, size, and installation efficiency.

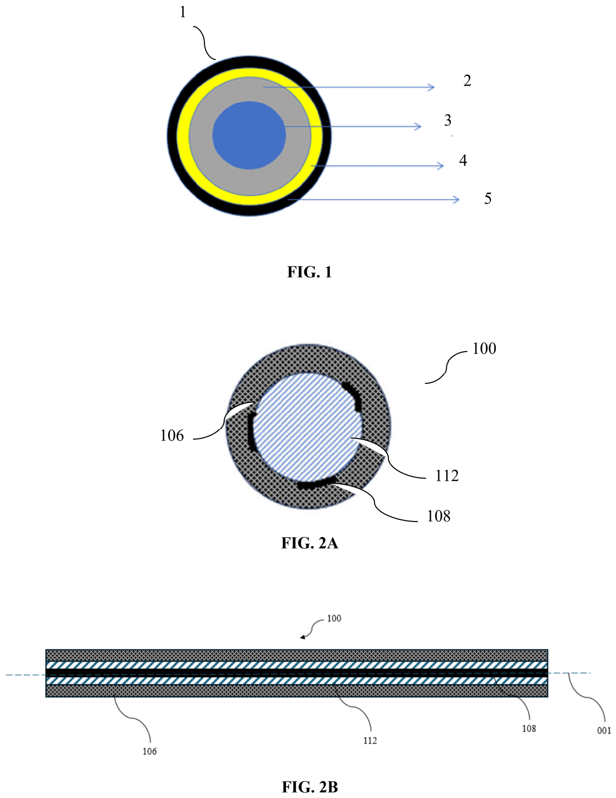

For example, in conventional designs such as the one illustrated in Fig.1, the optical fiber (3) is surrounded by an acrylic coating (2), with aramid yarns (4) further encasing the coating. This is all enclosed within an outer sheath (5). While this design provides basic protection, it falls short in several areas. The positioning of the aramid yarns outside the resin-embedded fibers results in reduced stiffness, which is crucial for ensuring the cable performs well during fiber blowing installations. This reduced stiffness impacts the cable's ability to be easily pushed through ducts, making it less suitable for high-efficiency installations. Moreover, the use of dual-layer acrylate coatings increases the size, weight, and cost of the cable, further complicating the installation process and making it less efficient.

Prior art references EP2056148B1and US9031369B2, propose variations of resin-embedded fiber units with aramid yarns surrounding them. While these designs aim to address the issues of fiber protection and mechanical integrity, they still suffer from similar drawbacks. The resulting structures are less stiff, which hinders their performance in blowing installations. Additionally, the inclusion of multiple layers increases the complexity of the design, making these solutions impractical for certain fiber optic applications.

The focus of these patents has primarily been on multi-fiber constructions, which do not adequately address the specific needs of single-fiber (1F) designs, where achieving the necessary stiffness and structural integrity is even more challenging. Furthermore, these conventional designs tend to rely on thermoplastic materials, such as PVC or FEP, which are typically more suited for indoor environments but lack the durability required for outdoor use. As a result, these cables are less capable of withstanding the harsh conditions often encountered in outdoor or high-performance environments.

Accordingly, to overcome the disadvantages of the prior art, there is an urgent need for a technical solution that overcomes the above-stated limitations in the prior arts by an innovative optical fiber cable that can overcome the above disadvantages. For instance, cables that offer improved stiffness, reduced size, and weight are critical for modern installations. Additionally, solutions that ensure high performance during cable blowing installations, while also being cost-effective and suitable for both indoor and outdoor applications, are increasingly in demand. The growing complexities of modern fiber optic networks require advancements in cable design that can meet these evolving needs.

Thus, the present disclosure proposes an optical fiber cable that overcomes the above limitations.

### SUMMARY OF THE DISCLOSURE

In an embodiment, the one or more flexible tensile yarns are embedded in the resin layer such that they are at least intermittently in direct contact with the one or more optical fibers along their longitudinal length. This direct contact within the common resin matrix creates an integral structural unit where mechanical forces may be efficiently transferred between the tensile yarns and optical fibers, providing superior stiffness and mechanical integrity compared to conventional designs where tensile elements are separated from the optical fibers by intervening layers.

In a particularly advantageous embodiment, the cured resin layer fully encapsulates both the optical fibers and tensile yarns to form a single, monolithic structural element. This integral construction eliminates free (<10%) space within the UFE, optimizes material usage, and provides isotropic mechanical properties that are particularly beneficial for air-assisted blowing installations.

Embodiments of the present disclosure relates to an optical fiber cable comprising one or more unified fiber elements (UFEs), where each unified fiber element comprises one or more optical fibers; and one or more flexible tensile yarns embedded in resin layer forming an integral unit.

According to the first aspect of the present disclosure, the unified fiber element (UFE) has a stiffness in a range of 1*10⁻⁵ to 5*10⁻³ N.m². In particular, the unified fiber element (UFE) comprising 1 to 24 optical fibers has an outer diameter (OD) in a range of 0.5 - 2mm. Moreover, the unified fiber element (UFE) comprises one or more tensile yarns having a mass in a range of 600-1670 dtex embedded in the resin layer. Further, the unified fiber element (UFE) comprises 2 to 6 flexible tensile yarns embedded in the resin layer.

According to the second aspect of the present disclosure, the resin layer is an acrylate-based UV curable layer.

According to the third aspect of the present disclosure,the tensile yarns are aramid yarns or any other flexible yarn.

According to the fourth aspect of the present disclosure, one or more optical fibers and the one or more tensile yarns of UFE are at least intermittently in contact with each other. In particular, one or more optical fibers and one or more tensile yarns of UFE are positioned substantially longitudinal. Further, the optical fiber cable has at least one sheath surrounding the one or more UFEs.

According to the fifth aspect of the present disclosure, an outer surface of the unified fiber element (UFE) comprises a plurality of ribs and grooves.

According to the sixth aspect of the present disclosure, the sheath has a young's modulus in the range of 1000-3000 MPa and coefficient of friction (CoF) in the range of 0.25-0.35. Further, the sheath has a thickness in a range of 0.1 to 1mm.

According to the seventh aspect of the present disclosure, the optical fiber cable comprising 1 to 24 optical fibers, 2-6 tensile yarns having a mass in a range of 600-1670dtex embedded in the resin layer, has an outer diameter in the range of 0.9mm to 3mm; and a tensile strength in the range of 20 to 150N when the optical fiber cable is under a strain in the range of 0.55 to 0.6% and ratio of tensile strength to outer diameter of greater than or equal to 6to N/mm.

According to the eighth aspect of the present disclosure, the optical fiber cable is configured to be blown to a distance of 800-1200 meters at an air pressure of 10±5 bar and a duct fill ratio (DFR) of 5-35%.

According to the ninth aspect of the present disclosure, the optical fiber cable has at least one of:an outer diameter in a range of 0.9mm to 1.8mm, when the optical fiber cable comprises 1 to 12 optical fibers and a sheath;an outer diameter in a range of 1.6mm to 3.0 mm, when the optical fiber cable comprises 12 to 24 optical fibers and a sheath; and an outer diameter in a range of 3mm to 10 mm, when the optical fiber cable comprises 24 to 288 optical fibers and a sheath. The optical fiber cable further comprises one or more layers between one or more UFEs and the sheath.

According to the ninth aspect of the present disclosure, method of manufacturing of an optical fiber cable comprises paying off one or more optical fibers, paying off one or more tensile yarns; passing the one or more optical fibers and one or more tensile yarns through a liquid resin bath; and curing of liquid resin such that one or more yarns such that one or more optical fibers and one or more tensile yarns are at least partially embedded in the resin forming an integral unit. The method further comprises extruding a sheath surrounding the fiber integral unit using pressure extrusion.

In an embodiment of the disclosure, curing is pulsating UV (PUV) curing. The PUV range 500-1500 pps (pulses per second).

The foregoing objectives of the present disclosure are attained by providing an optical fiber cable with bundles of optical fibers.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a conventional optical fiber cable;
Fig. 2A is a pictorial snapshot illustrating a cross-sectional view of an Unified Fiber Element (UFE) in accordance with an embodiment of the disclosure;
Fig. 2B is a pictorial snapshot illustrating an isometric view of an UFE in accordance with an embodiment of the disclosure;
Fig. 3 is a pictorial snapshot illustrating an optical fiber cable in accordance with an embodiment of the disclosure;
Fig. 4A is a pictorial snapshot illustrating an optical fiber cable in accordance with an embodiment of the disclosure;
Fig. 4B is a pictorial snapshot illustrating an isometric view of optical fiber cable in accordance with an embodiment of the disclosure;
Fig. 4C is a pictorial snapshot illustrating an another isometric view of optical fiber cable in accordance with an embodiment of the disclosure;
Fig. 5 is a pictorial snapshot illustrating yet optical fiber cable in accordance with a third embodiment of the disclosure;
Fig. 6 is a pictorial snapshot illustrating still optical fiber cable in accordance with a fourth embodiment of the disclosure;
Fig. 7 is a pictorial snapshot illustrating yet optical fiber cable in accordance with an embodiment of the disclosure;
Fig. 8 is a pictorial snapshot illustrating yet optical fiber cable in accordance with an embodiment of the disclosure;
Fig. 9 is a pictorial snapshot illustrating yet optical fiber cable in accordance with an embodiment of the disclosure;
Fig. 10 is a pictorial snapshot illustrating yet optical fiber cable in accordance with an embodiment of the disclosure; and
Fig. 11 is a pictorial snapshot illustrating a method of manufacturing of an UFE in accordance with an embodiment of the disclosure.

The optical cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

Fig.2 A and 2B illustrate the cross-sectional and isometric view of unified fiber element (UFE) (200) respectively. A single UFE (200) comprises one or more optical fiber (112), one or more flexible tensile yarn (108) and a resin layer (106). Fig. 2B further shows a longitudinal axis (001) of the UFE extending along the length of the element. In particular, optical fiber (112) is made of high-purity glass or similar transparent materials, carries the light signals, while the surrounding cladding, made of material with a lower refractive index, ensures that the light stays confined within the core through total internal reflection. Moreover, the structure has one or more protective coatings which minimizes signal loss and enables efficient data transmission over long distances. Further, contacting the optical fiber (112) is one or more flexible tensile yarns (108).

In accordance with an embodiment of the present disclosure, the tensile yarn (108), usually made from high-strength materials like aramid fibers (e.g., Kevlar), which enhances the mechanical strength of the cable. In particular, the tensile yarn (108) prevents the optical fibers from being stretched or broken under tension, ensuring the cable's integrity even during rigorous installation or use. Moreover, the one or more flexible tensile yarns (108) is made of a plurality of threads woven together.

In accordance with an embodiment of the present disclosure, the optical fiber (112) and flexible tensile yarn (108) are embedded in a resin (106) forming an integral element. In particular, the resin (106) surrounding the optical fiber (112) and tensile yarn (108) plays a crucial role in the overall performance and durability of the cable. Acting as both a protective and bonding medium, the resin provides a shield against environmental factors such as moisture, dust, and physical abrasion, thereby safeguarding the delicate optical fibers from potential damage. This protective barrier is essential for ensuring the longevity and reliability of the cable, particularly in challenging installation environments or harsh operational conditions. Further, the resin layer (106) serves to bond the optical fibers (112) and tensile yarns (108) together, securing them in place and preventing any relative movement between the two. This bonding is vital for maintaining the mechanical integrity of the cable, as it ensures that the tensile yarns (108) provide effective support to the optical fibers (112), helping them withstand pulling forces and mechanical stresses without risk of breakage or stretching.

In accordance with an embodiment of the present disclosure, the optical fiber (112) includes but is not limited to single-mode, multimode, single-core, and multicore configurations, providing flexibility in terms of data transmission needs. In particular, the optical fiber diameters range from 160 to 250 micrometers (µm), accommodating different signal transmission requirements and installation scenarios. Moreover, the core material of the optical fibers (112) can be made of silica, plastic, or even hollow structures, allowing the cable to be tailored for various environments, including those that require lightweight or specialized performance characteristics.

In accordance with an embodiment of the present disclosure, the flexible tensile yarns (108) have high young's modulus >60GPa. Further,the strength in tensile yarns (108) is required to enable pulling and connectorization applications of the UFE (200).

In accordance with an embodiment of the present disclosure, the resin layer (106) used in unified fiber element (UFE) is acrylate-based and is UV curable, offering excellent protection and stability to the fibers (112) and enhancing the mechanical strength of the cable. Moreover, the curing process of the resin plays a critical role in determining the overall performance of the cable. Further, the resin is ideally 80-99% cured, providing a tensile strength between 30-40 MPa. This range ensures that the unified fiber element (UFE) is strong enough to handle mechanical stresses during installation and use without breaking.

In accordance with an embodiment of the present disclosure, the integral structural nature of the UFE (200) is achieved by the resin layer (106) simultaneously encapsulating both the optical fibers (112) and tensile yarns (108) in a single curing operation. Unlike conventional designs where protective layers are applied sequentially, the present disclosure forms a unified matrix where the resin intimately surrounds and bonds to both the optical fibers and tensile yarns. This creates direct interfacial contact between the tensile yarns (108) and optical fibers (112) at multiple points along their length, which may be continuous or intermittent depending on the specific arrangement during manufacturing. The phrase "at least intermittently in direct contact" as used herein means that along the longitudinal axis (001) of the UFE (200), the tensile yarns (108) physically touch the optical fibers (112) at one or more discrete locations or continuously along their length. This contact occurs within the resin matrix (106) and is maintained by the cured resin which fixes the relative positions of the fibers and yarns. The intermittent contact may result from manufacturing variations, intentional spacing, or the natural arrangement when multiple components are passed through the resin bath together.

In accordance with an embodiment of the present disclosure, if the tensile strength is less than 30 MPa, the UFE may not have sufficient strength to handle pulling forces, potentially leading to damage or breakage. The tensile strength exceeding 40 MPa can make the UFE brittle, which negatively affects its ability to bend and resist kinking, compromising the cable's flexibility and durability.

In accordance with an embodiment of the present disclosure, the resin's viscosity is also crucial for the manufacturing process. At a viscosity of 7000-10000 mPa.s between 30-60°C, the resin is optimally formulated for processing and molding the unified fiber element. If the viscosity falls below 7000 mPa.s, the resin becomes difficult to process, and the unit shape could distort due to gravity effects. Conversely, a viscosity above 10000 mPa.s would make the processing slower, increasing the time required for manufacturing and potentially leading to brittleness in the final structure, which could impact the cable's long-term performance.

In accordance with an embodiment of the present disclosure, the curing process of the resin can be adjusted between 80%-99% of saturation level, allowing for optimization of the stiffness of the unified fiber element based on the cable design. The cured percentage of resin in UFE may be measured using Fourier transform infrared spectroscopy (FTIR), based on peak area and height changes of the functional group. This flexibility in curing enables manufacturers to fine-tune the mechanical properties of the cable, ensuring that it meets the specific requirements for its intended application, whether it demands higher flexibility or increased rigidity. Further, in addition to UV curable resin, heat-curable resin may also be used as an alternative, offering different curing and performance characteristics depending on the application. This variety of resin options provides manufacturers with the ability to customize the cable's performance, ensuring optimal functionality and durability for a wide range of optical communication systems.

In accordance with an embodiment of the present disclosure, in the curing process the resin that surrounds the fibers and yarns in the unified fiber element (UFE). Unlike traditional continuous UV curing, pulsed UV curing involves the emission of UV light in short, high-intensity bursts or pulses. In particular, the pulses range from 500 to 1500 pulses per second (pps)at a wavelength of 315nm to 400nm and intensity range between 30-60 mW/cm, allowing for rapid and efficient curing of the resin material. Further, the high-intensity bursts of UV light enable the resin to cure quickly, even at lower temperatures, without the need for prolonged exposure resulting in improved production efficiency, as well as a more uniform and precise curing process that ensures the mechanical properties of the UFE are optimized.

In accordance with an embodiment of the present disclosure, the curing process used in the UFE has a direct impact on the final properties of the cable, particularly in terms of stiffness, tensile strength, crush resistance, impact resistance, and ease of installation. In particular, the stiffness of the UFE, ranging from 1 × 10⁻⁵ to 5 × 10⁻³ Nm² and isotropic in nature, is carefully optimized to aid in the installation process, especially during fiber blowing. Further, the stiffness range ensures that the UFE remains stable and rigid enough for efficient handling during installation, while also maintaining flexibility to facilitate easy insertion into conduits or ducts without excessive resistance.

In accordance with an embodiment of the present disclosure, the tensile strength of the UFE (200) is another important property, with a range of 20 to 150 N, and a fiber strain of less than 0.6% proof test, and ratio of tensile strength to outer diameter of greater than or equal to 6to N/mm. The combination makes the cable easy to pull and connectorize, without causing undue strain on the fibers inside. In particular, the low fiber strain ensures that the optical fibers remain intact during installation, preventing breakage or signal degradation that could occur with excessive stretching. Further, the UFE's tensile strength enables it to handle the mechanical forces typically encountered during cable installation, ensuring that it can be safely and efficiently deployed without compromising its integrity.

In accordance with an embodiment of the present disclosure, the UFE is also designed to withstand external forces such as crushing and impact, which are common during transportation, handling, and installation. In particular, the crush resistance is rated at 80-100 N per 100 mm, which makes it durable enough to resist damage from compression forces that could otherwise cause the fibers to bend or break. Further, the impact resistance of 1-5 Nm ensures that the cable can tolerate occasional knocks or impacts without significant damage, helping to protect the integrity of the optical fibers during installation and use.

In accordance with an embodiment of the present disclosure, the ease of stripping the UFE is an important feature that enhances the overall efficiency of cable installation. In particular, the UFE can be stripped up to 25 cm in a single pull, which simplifies the process of removing the resin layer (106) or other outer protective elements to access the fibers. Moreover, the ease of stripping reduces the time and effort required during installation, making it quicker and more cost-effective to prepare the cable for termination or connection to other components in a network. Further, the use of pulsed UV curing and the optimized mechanical properties of the UFE make the cable easier to install, handle, and protect during use, ultimately resulting in a more efficient and reliable solution for high-performance optical fiber communication systems.

In accordance with an embodiment of the present disclosure, the yarns (108) used in the UFE may include materials such as aramid, polyethylene (PE), nylon yarn, Kevlar, and glass roving. These materials are chosen for their exceptional tensile strength and durability. Aramid fibers, such as Kevlar, are known for their high tensile strength, making them ideal for reinforcing cables that need to withstand significant mechanical stress. PE and nylon offer flexibility and resistance to environmental factors, while glass roving provides additional rigidity and resistance to high temperatures.

In accordance with an embodiment of the present disclosure, the yarns are positioned longitudinally, meaning they run along the length of the UFE, with at least partial or intermittent contact with one or more optical fibers of the UFE, meaning that the yarns and optical fibers may be in continuous contact throughout the length of the UFE or the yarns and optical fibers may be in contact at one or more cross-sections along the length of the UFE. In particular, the longitudinal arrangement is critical because it allows the yarns to provide high tensile strength to the UFE while minimizing the strain on the optical fibers themselves. Moreover, the positioning of the yarns ensures that the forces applied to the cable during installation or operation are distributed efficiently across the entire length of the UFE, reducing the risk of damage to the fibers. Further, the yarns are then embedded in the resin that surrounds the fibers, helping to hold the fibers and yarns in place within the UFE structure. The yarns can be configured in various forms, including flat-shaped, twisted, braided, or any other suitable arrangement, depending on the specific requirements of the cable.

In accordance with an embodiment of the present disclosure, the high Young's modulus is between 30 GPa to 80 GPa and preferably greater than 60 GPa. Young's modulus is a measure of the material's stiffness, and a higher value indicates that the yarns are particularly strong and resistant to elongation under stress. In particular, the high stiffness is essential for providing the necessary tensile strength to the UFE, ensuring that the cable can withstand mechanical forces without experiencing significant deformation or damage. Further, the high Young's modulus of the yarns helps ensure that the UFE remains stable and durable under challenging conditions, such as during installation, handling, or operation.

In accordance with an embodiment of the present disclosure, the unified fiber element (UFE) (200) can be used as a standalone cable without the need for an additional outer sheath. In particular, the UFE itself possesses sufficient mechanical properties to function effectively as a cable, particularly in indoor applications. This makes it a viable option for applications where a traditional cable sheath may not be necessary, such as in environments with controlled conditions where additional protection is not required. By eliminating the outer covering, the UFE design contributes to reducing the overall carbon footprint of the cable, as there is no need for the additional materials typically used in cable sheathing.

In an embodiment, the UFE (200) as described herein may be used as a complete, functional optical cable without any additional protective sheath. In this standalone configuration, the cured resin layer (106) provides sufficient environmental protection, mechanical strength, and handling characteristics for indoor applications or controlled environments. The elimination of the outer sheath reduces the cable's diameter, weight, and material consumption while maintaining the core mechanical benefits of the integral fiber-yarn-resin structure. When configured as a standalone cable, the UFE (200) exhibits crush resistance in the range of 80-100 N per 100 mm and impact resistance of 1-5 Nm, making it suitable for direct installation in raceways, trays, or other protected pathways without additional jacketing.

Further, the absence of an outer covering reduces the overall size and weight of the cable, making it easier to handle and install. This can lead to faster and more cost-effective installations, especially in environments where space is limited or where flexibility and ease of installation are important factors. Furthermore, since there is no outer cover to strip, the UFE simplifies the installation process, reducing time and labor costs.

In accordance with an embodiment of the present disclosure, the sheath layer (110) includes but is not limited to WSY, tensile layer, metal tape, WBT, dielectric armor, mica tape, thermoplastic layer etc.

In accordance with an embodiment of the present disclosure, unified fiber elements (UFEs) (200) in the optical fiber cable (100) are designed with a stiffness range of 1 × 10⁻⁵to 5× 10⁻³N·m². The UFE's outer diameter (OD) ranges from 0.5mm to 2mm. The number of optical fibers (112) within each UFE unit can range from 1 to 24.

In accordance with an embodiment of the present disclosure, the Unified Fiber Element (200) is an optical unit comprising one or more optical fibers and one or more tensile yarns embedded in resin forming an integral unit. The relative position of one or more fibers and one or more tensile yarns is fixed in the resin.

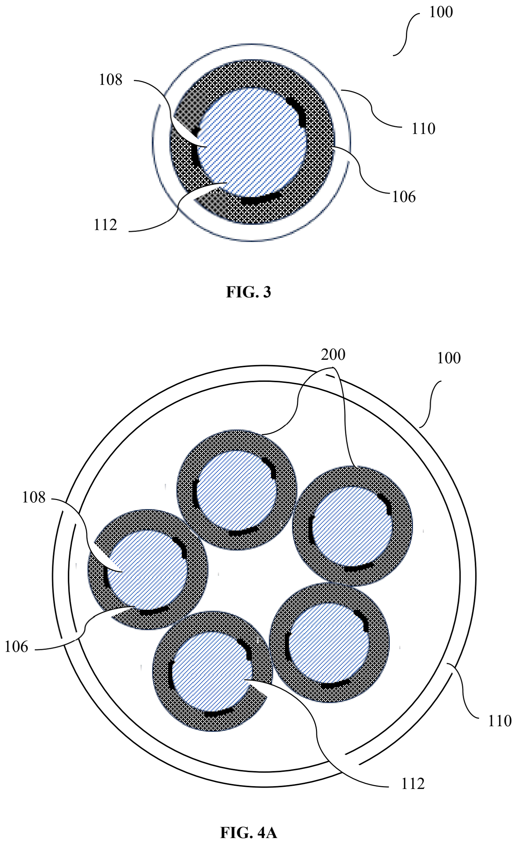

Fig. 3 illustrates an optical fiber cable (100) in accordance with the first embodiment of the disclosure. In particular, the optical fiber cable(100) comprises a UFE (200) and a sheath (110). Moreover, the optical fiber cable (100) that includes a single UFE (200) is a modular unit composed of several key components, which work together to form a cohesive, integral structure for the optical fiber cable. Further, the optical fiber is the core component responsible for the transmission of light signals.

In addition to a single optical fiber, the UFE (200) contains one or more tensile yarns (108), which are embedded within a resin layer (106) forming an integral element. In particular, the tensile yarn (108) yarns enable the cable to withstand mechanical stresses during installation, pulling, or handling, preventing the optical fibers (112) from stretching or breaking. Moreover, the tensile yarns (108) are strategically placed within the resin layer (106), at least in partial or intermittent contact with the optical fiber, providing both protection and structural integrity to the UFE. Further, the sheath (110) is the outermost layer of the cable.

In accordance with an embodiment of the present disclosure, the sheath encapsulates the entire assembly, providing additional strength and resilience, while also offering a smooth and uniform exterior for easier handling and installation. Together, the UFE and sheath work in synergy to ensure that the cable can withstand rigorous conditions, deliver reliable data transmission, and maintain its performance over extended periods. The sheath (110) serves as the final protective barrier that surrounds the unified fiber elements (UFEs) (200). The thickness of the sheath ranges between 0.1mm-1mm.

In accordance with an embodiment of the present disclosure, the optical fiber cable is designed to withstand tensile forces of 20 to 150N, with a fiber strain of less than 0.6% proof test, for outer diameters between 1mm and 3mm. Further, the cable supports fiber counts from 1 to 24 and uses 2 to 6 aramid tensile yarns (600-1670dtex) for added mechanical strength. This ensures the cable maintains its structural integrity during installation and operation.

In general, Dtex is an abbreviation for Decitex, which is a unit of measurement for the linear mass of yarn. It is used to measure the weight of yarn per 10,000 meters.

In accordance with an embodiment of the present disclosure, the optical fiber cable, with an outer diameter (OD) between 1mm and 3mm, is optimized for blowing installation over distances ranging from 800 to 1200 meters. In particular, it operates efficiently at an air pressure of 10±5 bar and supports a duct fill ratio (DFR) between 5% and 35%. Further, the cable's OD varies depending on the fiber count: less than 1.8mm for 1-12 fibers (F), between 1.6mm and 3mm for 12-24 fibers, and greater than 3mm for 24 to 288 fibers, allowing for flexible and scalable installations based on network requirements.

In accordance with an embodiment of the present disclosure, the sheath of the optical fiber cable has a Young's modulus ranging from 1000 to 3000MPa, providing durability and flexibility. It also has a coefficient of friction (CoF) between 0.25 and 0.35, ensuring smooth handling and installation.

In accordance with an embodiment of the present disclosure, for accurate and consistent measurement of the cable's dimensions, the diameter is typically determined by taking the mean of 3-5 readings with a vernier caliper, ensuring precision in the manufacturing process. Further, tensile strength is measured according to the IEC 60794-1-21 E1 standard, which ensures that the cable can withstand the required mechanical stresses during installation and operation without damaging the fibers.

In accordance with an embodiment of the present disclosure, the stiffness is measured using the formula $Stiffness = EI ,$
where "E" is the Young's modulus and
"I" is the area moment of inertia.

This formula helps quantify the cable's resistance to bending, which is important for ensuring that the cable remains stable and intact during handling, installation, and use. The sheath modulus, which further defines the strength and flexibility of the sheath material, is measured according to the ASTM D-638 standard, ensuring that the sheath meets specific criteria for durability and performance in a variety of environmental conditions. These combined measurements ensure that the sheath provides the optimal balance of strength, flexibility, and ease of installation, making the cable suitable for a wide range of applications.

Fig. 4A illustrates an optical fiber cable (100) comprising multiple unified fiber elements (UFEs) with single optical fiber (112). In particular, each UFE (200) has single optical fibers (112). Moreover, each UFE(200) may have multiple optical fibers (112). The use of multiple Unified Fiber Elements (UFEs) in an optical fiber cable (100) provides several advantages in terms of both performance and flexibility. Further, each UFE typically consists of a resin-embedded optical fiber and one or more tensile yarns, which offer mechanical strength and protect the optical fibers from external stresses during installation and use. By incorporating multiple UFEs within a single optical fiber cable, the design allows for the simultaneous transmission of multiple light signals through the different optical fibers, increasing the overall data capacity of the cable. Multiple UFEs also enable easier management of fiber counts in cable construction.

In an exemplary example, each UFE could contain a single optical fiber, as shown in Fig.4A, or a group of fibers, allowing for customization of the cable's configuration based on specific application needs, such as the number of fibers required for a particular network or installation. This modular approach makes it easier to scale the cable for different use cases while maintaining optimal performance in terms of both signal integrity and mechanical strength.

In accordance with an embodiment of the present disclosure, the multiple UFEs provide increased redundancy, as damage to one UFE does not necessarily affect the entire cable's performance. This makes the cable more resilient to mechanical stresses and environmental challenges, ensuring reliable and continuous data transmission. Further, the multiple UFEs are encapsulated together within a protective sheath (110), which further enhances the cable's durability and ensures the safe and efficient transport of optical signals over long distances.

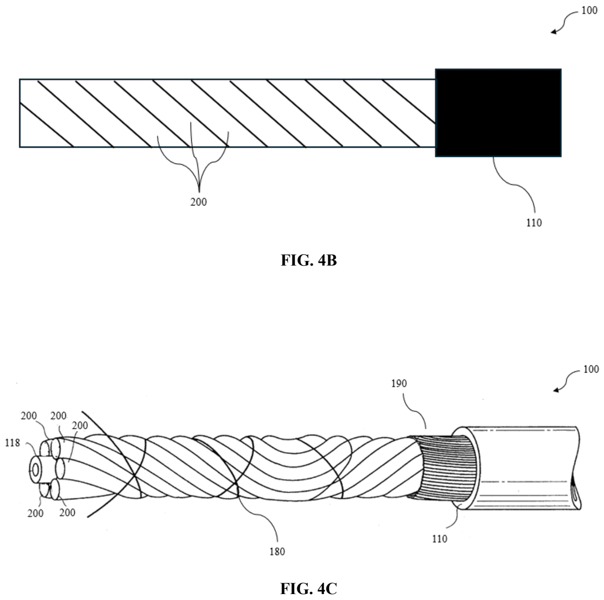

Fig.4B illustrates an isometric view of an optical fiber cable (100) comprising a plurality of UFEs (200), each UFE comprising one or more optical fibers (112). The plurality of UFEs (200) are enclosed by a sheath (110). In particular, the plurality of UFEs are helically bound together with a lay of 200mm to 400mm. Moreover, the lay length provides the UFEs with extra fiber length that helps in reducing optical attenuation during handling and installation. Further, the plurality of UFEs are held together in a bound state by one or more binding elements. The sheath (110) of the cable may have one or more strength members embedded at least partially within the sheath. There may be one or more layers present in between the plurality of UFEs (200) and the sheath (110).

Fig.4C illustrates another embodiment of an isometric view of an optical fiber cable (100) comprising a plurality of UFEs (200), each UFE comprising one or more optical fibers (112). In particular, the plurality of UFEs (200) are enclosed by a sheath (110). Moreover, the plurality of UFEs are bidirectionally bound around a central strength member(118) with a lay of 70mm to 150mm. The lay length provides the UFEs with extra fiber length that helps in reducing optical attenuation during handling and installation. Further, the plurality of UFEs are held together in a bound state by one or more binding elements (180). There may be one or more (190) present in between the plurality of UFEs (200) and the sheath (110).

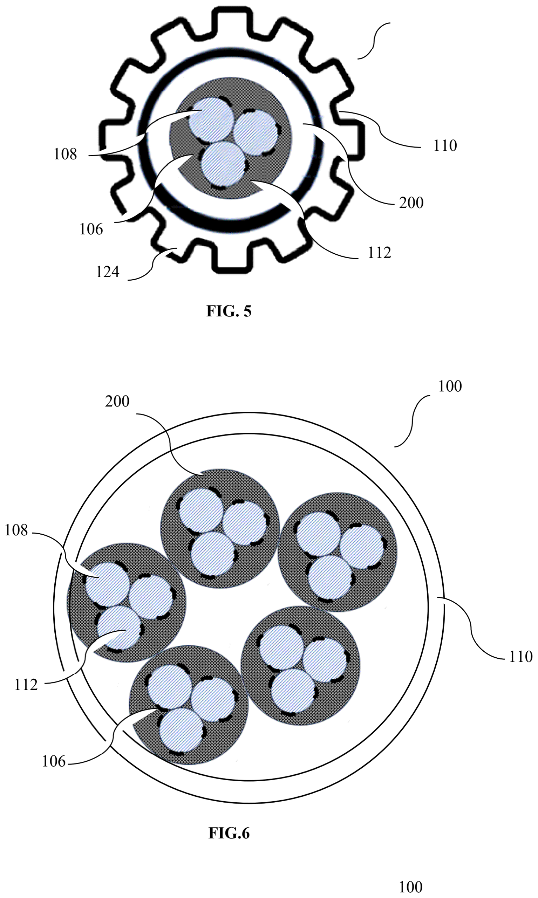

Fig. 5 illustrates an optical fiber cable (100) comprising a single UFE (200),the UFE comprising multiple optical fibers (112) and one or more tensile yarns (108). In particular, the multiple optical fibers (112) within a single Unified Fiber Element (UFE) (200) in an optical fiber cable (100) offers several key benefits in terms of performance, efficiency, and design flexibility. By integrating multiple optical fibers within a single UFE, the cable can handle higher data transmission capacities in a more compact and organized form. This conFig. uration allows multiple light signals to travel simultaneously through each optical fiber, significantly increasing the overall bandwidth of the cable.

In accordance with an embodiment of the present disclosure, the optical fiber cable (100) comprises a sheath (110) having a plurality of ribs (124). In particular, the ribs (124)over the sheath layer (110) can also contribute to the bending performance and blowing performance of the cable (100). By providing an evenly distributed external structure, the ribs allow the cable to bend more easily without damaging the internal fibers or components. Further, the ribs (124) essentially create a buffer between the cable and external pressure, which helps maintain the integrity of the cable's internal elements.

Incorporating multiple fibers (112) within a single UFE (200) also contributes to improved space efficiency. Instead of housing each optical fiber separately, the fibers are grouped together within the same resin-embedded unit. This not only reduces the overall size of the cable but also simplifies the construction process, making it easier to manufacture and install. Additionally, the resin embedding provides protection for all the fibers within the UFE, offering a unified barrier against environmental factors such as moisture, dust, and physical damage, which is crucial for maintaining the integrity of the signal transmission.

In accordance with an embodiment of the present disclosure, grouping multiple optical fibers within one UFE enhances the mechanical strength of the cable. Further, the tensile yarns positioned in the UFE provide support to the bundle of fibers, preventing stretching or breaking under tension during installation and operational use. This ensures the fibers remain intact and maintain their signal integrity even under stress.

Fig.6 illustrates an optical fiber cable (100) comprises multiple UFE (200) each having multiple optical fibers (112) inside. In particular, the multifiber optical fiber cable comprises multiple unified fiber elements (UFE) (200) with multiple optical fiber (112). Each UFE has multiple optical fibers (112) and one or more tensile yarns (108) at least in partial contact with one or more optical fibers. The optical fiber (112) and the tensile yarn (108) are embedded in a resin (106) forming an integral element.

In an embodiment of the disclosure, the optical fiber cable (100) described in the embodiment is highly adaptable, offering various fiber types and materials to suit different applications.

Further, the sheath (110) of an optical fiber cable plays a critical role in determining its overall mechanical performance, particularly in terms of its strength, flexibility, and ease of installation. In particular, the Young's modulus of the sheath is a key property, typically ranging from 1000 to 3000MPa. If the Young's modulus is below 1000 MPa, the cable may lack sufficient strength for outdoor applications, especially for smaller cables that need to withstand environmental stresses. On the other hand, if the Young's modulus exceeds 3000MPa, the cable may exhibit poor bending and kink resistance, making it difficult to install, especially in constrained or small spaces where flexibility is crucial.

In accordance with an embodiment of the present disclosure, the coefficient of friction (CoF), which is optimized to range from 0.25 to 0.35. This range ensures that the cable performs well during blowing installation, where the cable is pushed through ducts or conduits. A CoF above 0.35 can negatively impact the blowing performance, leading to higher friction, which makes the cable more difficult to install and could increase the risk of damage to the cable or conduit during installation.

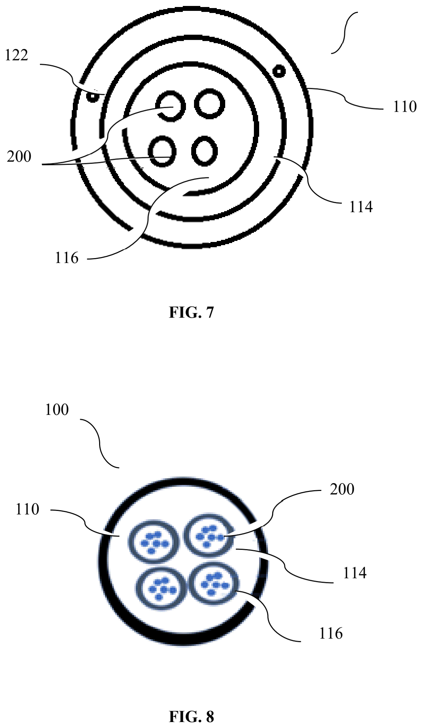

Fig.7 illustrates an optical fiber cable (100) comprising UFEs (200), surrounded by a single central tube (114). In between the tube and the UFEs there is one of a gel medium (116),empty space and one or more water swellable yarns. In particular, the tube (114) may be surrounded by one or more layers of aramid yarn, water blocking tape, water swellable yarn etc. Outermost is the sheath (110) to protect the UFEs (200).These tubes are crucial for providing additional mechanical protection to the UFEs. Moreover, the tube helps shield the optical fibers and resin from potential damage due to external forces, such as crushing or impact, and also helps to maintain the structure and alignment of the UFEs within the cable.

In between each UFE (200) and its surrounding tube (114), there is a gel medium (116). The gel layer serves multiple protective functions. First, it acts as a moisture barrier, preventing water from coming into contact with the optical fibers and thereby safeguarding the fibers from moisture-induced degradation. In particular, the gel also provides a cushioning effect, which absorbs mechanical stresses and minimizes the risk of damage to the delicate optical fibers during installation or under environmental stress. Moreover, gel medium ensures that the UFEs remain securely in place within their respective tubes, preventing unwanted movement that could lead to strain on the fibers. Further, the gel medium can be replaced by one or more water swellable yarns to form a dry construction.

In accordance with an embodiment of the present disclosure, the optical fiber cable (100) comprises embedded strength members (122) that are positioned between the inner surface and outer surface of the sheath (110). The embedded strength members(122) include but are not limited to ARP, FRP and steel rod etc.

In accordance with an embodiment of the present disclosure, the embedded strength member (122) can vary in shape, positioning and numbers. Alternatively, the embedded strength member (122) can be partially or completely embedded within the sheath (110).

In a preferred embodiment, the embedded strength member (122) is round in shape and completely embedded within the sheath (110).

Fig.8 illustrates an optical fiber cable (100) comprising multiple UFEs (200) surrounded by multiple tubes (114).The structure of a multifiber optical fiber cable (100) designed to optimize the protection and performance of multiple optical fibers. The core of the cable consists of multiple Unified Fiber Elements (UFEs) (200). In particular, each UFE is an individual unit that contains one or more optical fibers and one or more tensile yarns, which are embedded in a resin matrix for protection and stability. Further, UFEs form the fundamental building blocks of the cable, responsible for carrying the optical signals.

In accordance with an embodiment of the present disclosure, each UFE (200) is a protective tube (114). All the multiple UFEs, each surrounded by its own tube and water blocking medium, are then enclosed within a single outer sheath (110). The sheath is the outermost protective layer of the cable, and it serves to shield the internal components from external elements such as physical damage, moisture, UV radiation, chemicals, and temperature fluctuations. Further, the sheath is typically made from a durable, weather-resistant material such as polyethylene or another polymer that provides both mechanical strength and environmental protection.

In accordance with an embodiment of the present disclosure, multicore optical fiber cable (100) as shown in Fig.8 ensures a high level of protection and performance. Further, the individual tubes and gel mediums surrounding each UFE provide robust protection for each optical fiber element, while the single outer sheath ties the entire structure together, offering comprehensive shielding for the whole cable. This configuration enhances the cable's overall durability, reduces the likelihood of signal degradation, and ensures that the fibers are well-protected from the elements and mechanical damage during installation and long-term use.

The present disclosure is particularly well-suited for applications that require high-density optical fiber networks or where the cable will be exposed to harsh environmental conditions.

Further, the optical fiber cable (100) may comprise embedded strength members (122) that are positioned between the inner surface and outer surface of the sheath (110).

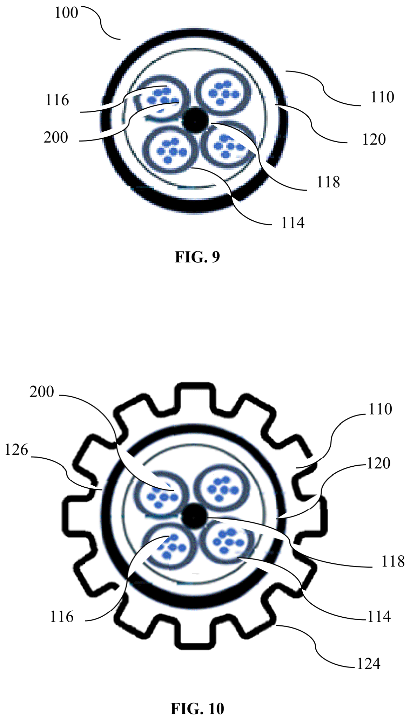

Fig.9 illustrates the optical fiber cable (112) with a central strength member (118) and binding element (120) both of which contribute significantly to the mechanical integrity and durability of the cable. In particular, the central strength member (118) is typically a rod or wire made from a strong material such as steel or fiberglass. Moreover, it is positioned at the center of the cable to provide longitudinal strength and resistance to tensile forces. Further, the strength member ensures that the cable can withstand pulling forces during installation without causing damage to the optical fibers or other internal components. It also helps maintain the overall structural stability of the cable, preventing it from stretching or breaking under stress.

In accordance with an embodiment of the present disclosure, the binding element (120), which surrounds the central strength member, plays a key role in holding the internal components of the cable together. This element can be a binding tape, thread, or a similar structure that keeps the optical fibers, strength member, and other elements of the cable in place. Further, the binding element provides additional support to the overall cable structure, ensuring that the internal components do not shift or move out of alignment during handling, installation, or operation. It also helps in organizing and securing the cable's internal elements, ensuring that they remain protected and properly positioned within the sheath.

Together, the central strength member (118) and binding element (120) enhance the mechanical performance of the optical fiber cable (112), providing both structural support and protection against mechanical stress, thereby increasing the cable's durability and reliability during installation and use. Further, the combination of these components ensures that the cable can endure the challenges of outdoor and indoor environments, offering long-lasting performance with minimized risk of damage or failure.

In accordance with an embodiment of the present disclosure, the central strength member (118) is used to protect the optical fiber cable (100) from loads during installation of the optical fiber cable (100). In particular, the central strength member (118) provides tensile strength and stiffness to the optical fiber cable (100). Moreover, the tensile strength corresponds to a resistance shown by the optical fiber cable (100) against breaking when pressure is applied.

In accordance with an embodiment of the present disclosure, the optical fiber cable ( as shown in Fig.10) comprises a sheath having a plurality of ribs (124). In particular, the outermost profile is the alternating ribs (124) and grooves(126) over the outer surface of sheath (110). Further, the ribs (124) can also contribute to the bending performance of the cable. By providing an evenly distributed external structure, the ribs allow the cable to bend more easily without damaging the internal fibers or components. The ribs (124) essentially create a buffer between the cable and external pressure, which helps maintain the integrity of the cable's internal elements.

In accordance with an embodiment of the present disclosure, the strength member (118) may be embedded in the sheath (110).

In addition to their protective functions, the ribs (124) may also assist with cable handling and installation. Their raised structure can make the cable easier to grip and pull during installation, reducing the risk of slipping or difficulty in managing the cable during deployment. This can be particularly advantageous in installations where the cable needs to be pulled through long conduits or tight spaces.

Further, the addition of ribs (124) as the outermost layer, following the sheath, significantly enhances the multicore optical fiber cable's durability, flexibility, and handling properties. These ribs provide both physical protection and improved installation efficiency, ensuring that the cable performs well even under challenging conditions.

In accordance with an embodiment of the present disclosure, embedding one or more optical fibers (112) alongside one or more tensile yarns within a resin matrix, forming a unified fiber element (UFE) (200). This unique configuration offers several technical advantages, particularly in terms of the mechanical properties and space efficiency of the optical fiber cable. In particular, the integration of tensile yarns into the resin matrix improves the stiffness of the UFE, making it more robust and resistant to external mechanical stresses. Further, added stiffness ensures that the unit maintains its structural integrity during installation and operation, helping the cable withstand pulling and handling forces without compromising its performance. Furthermore, by embedding the fibers and tensile yarns in the resin, the present disclosure optimizes space utilization, leaving no free space within the UFE (200). This compact configuration not only saves material but also reduces the overall size of the cable, making it ideal for high-density installations where space is limited.

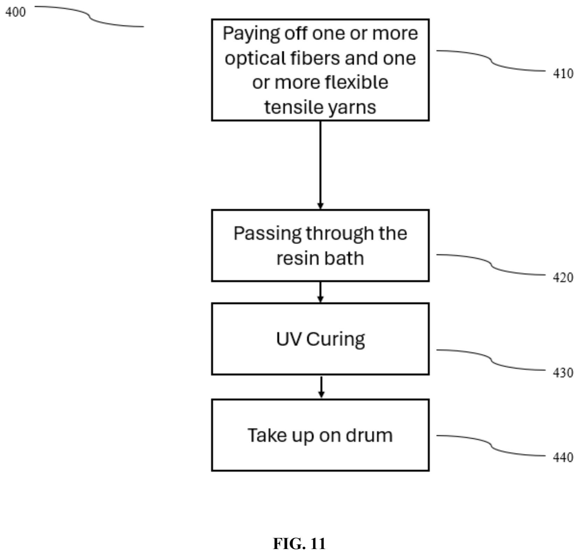

Fig.11 illustrates a flowchart of method of manufacturing (400) of the UFE in an embodiment of the disclosure. The method of manufacturing of an optical fiber cable comprising steps of paying off one or more optical fibers and paying off one or more tensile yarns (410) under a tension of 0.6N to 1N passing the one or more optical fibers and one or more tensile yarns through a liquid resin bath (420), curing of liquid resin such that one or more yarns (430) such that one or more optical fibers and one or more tensile yarns are at least partially embedded in the resin forming an integral unit. The product is then taken up on a drum (440) for further use.

In an embodiment, the method produces a UFE (200) where the optical fibers (112) and tensile yarns (108) become fixed in position relative to each other within the cured resin layer (106). The tension applied during paying off (0.6-1.0 N) ensures the components remain substantially straight and parallel, facilitating the formation of at least intermittent direct contact between them as they pass through the resin bath. This contact is preserved during the curing process, resulting in the integral structural unit with the advantageous mechanical properties described herein.

In an embodiment, the pulsed UV curing at 500-1500 pulses per second provides rapid, controlled curing that minimizes heat buildup and prevents distortion of the fiber-yarn arrangement, ensuring consistent formation of the integral structure along the entire length of the UFE.

The optical fiber cable according to the present disclosure provides several technical advantages over conventional designs. First, by embedding both optical fibers (112) and tensile yarns (108) within a common resin matrix (106) with at least intermittent direct contact, the UFE (200) achieves significantly improved stiffness that is isotropic in nature. This isotropic stiffness, in the range of 1×10⁻⁵ to 5×10⁻³ N·m², enables improved performance during air-assisted blowing installation, particularly over long distances of ~1200 meters.

Second, the integral construction eliminates the need for separate buffer layers between the optical fibers and tensile elements, reducing the overall diameter of the cable by 10-25% compared to conventional designs with equivalent fiber counts. This space efficiency enables higher fiber density in multi-fiber cables and reduces material consumption.

Third, the direct contact between tensile yarns (108) and optical fibers (112) within the resin matrix (106) may create efficient stress transfer mechanisms. When the cable is under tension, forces are distributed more evenly between the tensile yarns and optical fibers, reducing localized strain on individual fibers and minimizing signal degradation during installation and service.

Fourth, the manufacturing method using pulsed UV curing at 500-1500 pps allows precise control over the degree of resin cure (80-99%), enabling optimization of the balance between stiffness and flexibility for specific installation requirements.

Advantageously, the technical significance of this present disclosure is evident in the unexpected results it provides. The embedding of fibers and tensile yarns within the resin leads to improved stiffness, which is crucial for maintaining the stability of the UFE during installation, such as in fiber blowing applications. The increased stiffness prevents the fibers from bending excessively or getting damaged during the installation process. Additionally, the present disclosure optimizes space utilization by eliminating any unused areas within the UFE. As a result, the cable is more compact and easier to install in constrained spaces, while also reducing the material used in production, thereby lowering the environmental impact of manufacturing. Moreover, by embedding the fibers in resin, the risk of fiber protrusion is eliminated. This ensures that the fibers remain securely encased and protected from physical damage during installation or in service, which can otherwise lead to signal loss or cable failure.

Another unexpected benefit of this disclosure is the reduction in fiber strain. The tensile yarns, strategically placed within the resin, help distribute mechanical forces more evenly across the UFE minimizing the strain on the individual optical fibers, reducing the likelihood of breakage or signal degradation that can result from excessive tension. Thus, the cable becomes more resilient to external stresses, improving its durability and performance over time. This integrated approach not only improves the mechanical properties of the cable but also enhances its longevity and reliability, ultimately reducing the need for frequent maintenance or replacement.

While various aspects of the present disclosure have been illustrated and described, it will be clear that the present disclosure is not limited to these aspects only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An optical fiber cable (100) comprising one or more unified fiber elements, UFEs (200), **characterized in that** each UFE (200) comprises:
one or more optical fibers (112) extending longitudinally along the UFE;
one or more flexible tensile yarns (108) extending longitudinally along the UFE; and
a cured resin layer (106) encapsulating both the one or more optical fibers (112) and the one or more flexible tensile yarns (108) to form an integral structural unit, wherein the one or more flexible tensile yarns (108) are at least intermittently in direct contact with the one or more optical fibers (112) along their length within the resin layer (106).

2. The optical fiber cable (100) as claimed in claim 1, wherein the resin layer (106) comprises a UV-cured acrylate resin.

3. The optical fiber cable (100) as claimed in claim 2, wherein the resin layer (106) is cured to 80% to 99% of saturation level.

4. The optical fiber cable (100) as claimed in claim 1, wherein the UFE (200) has a bending stiffness in the range of 1×10⁻⁵ N·m² to 5×10⁻³ N·m².

5. The optical fiber cable (100) as claimed in claim 1, wherein the UFE (200) has an outer diameter in the range of 0.5 mm to 2.0 mm.

6. The optical fiber cable (100) as claimed in claim 1, wherein the one or more flexible tensile yarns (108) comprise aramid yarns having a linear density in the range of 600 dtex to 1670 dtex.

7. The optical fiber cable (100) as claimed in claim 1, wherein the UFE (200) comprises 2 to 6 of said flexible tensile yarns (108) embedded in the resin layer (106).

8. The optical fiber cable (100) as claimed in claim 1, further comprising a sheath (110) surrounding the one or more UFEs (200).

9. The optical fiber cable (100) as claimed in claim 8, wherein the sheath (110) has a Young's modulus in the range of 1000 MPa to 3000 MPa and/or a coefficient of friction in the range of 0.25 to 0.35.

10. The optical fiber cable (100) as claimed in claim 8, wherein the optical fiber cable (100) has one of:
an outer diameter in the range of 0.9 mm to 1.8 mm when comprising 1 to 12 optical fibers (112); or
an outer diameter in the range of 1.6 mm to 3.0 mm when comprising 12 to 24 optical fibers (112); or
an outer diameter in the range of 3.0 mm to 10.0 mm when comprising 24 to 288 optical fibers (112).

11. The optical fiber cable (100) as claimed in claim 8, wherein the cable comprises a plurality of UFEs (200) helically bound together with a lay length of 200 mm to 400 mm.

12. The optical fiber cable (100) as claimed in claim 8, further comprising a central strength member (118), wherein a plurality of UFEs (200) are bidirectionally bound around the central strength member (118) with a lay length of 70 mm to 150 mm.

13. The optical fiber cable (100) as claimed in claim 8, wherein the optical fiber cable (100) is configured to be installed by air-assisted blowing to a distance of 800 meters to 1200 meters at an air pressure of 10±5 bar and a duct fill ratio of 5% to 35%.

14. A method of manufacturing a unified fiber element, UFE (200), for an optical fiber cable (100), the method **characterized by** the steps of:
paying off one or more optical fibers (112) and one or more flexible tensile yarns (108) under a tension of 0.6 N to 1.0 N;
passing the one or more optical fibers (112) and one or more flexible tensile yarns (108) through a liquid resin bath to coat them with resin; and
curing the resin to form the UFE (200) as an integral structural unit in which both the optical fibers (112) and tensile yarns (108) are embedded in a cured resin layer (106), with the tensile yarns (108) being at least intermittently in direct contact with the optical fibers (112) along their length.

15. The method as claimed in claim 14, wherein the curing step comprises exposing the resin-coated optical fibers (112) and tensile yarns (108) to pulsed UV light at a pulse rate of 500 to 1500 pulses per second.

16. The method as claimed in claim 14, wherein the liquid resin has a viscosity in the range of 7000 mPa·s to 10000 mPa·s at a temperature of 30°C to 60°C.

17. The method as claimed in any one of claims 14, further comprising the step of extruding a sheath (110) around the UFE (200).

18. A unified fiber element, UFE (200), for use in an optical fiber cable (100), **characterized in that** the UFE (200) comprises:
one or more optical fibers (112);
one or more flexible tensile yarns (108); and
a cured resin layer (106) encapsulating both the optical fibers (112) and tensile yarns (108) to form an integral structural unit,
wherein the UFE (200) is configured as a standalone cable element without an outer sheath, and
wherein the one or more flexible tensile yarns (108) are at least intermittently in direct contact with the one or more optical fibers (112) along their length within the resin layer (106).
